# EUROPEAN PATENT SPECIFICATION

(11) **EP 1 862 382 B1**
(45) Date of publication and mention of the grant of the patent: **20.01.2010**
(21) Application number: 07109383.5
(22) Date of filing: 01.06.2007
(51) Int. Cl.: B62J 1/26

(54) **Saddle and method for conforming a seat of such a saddle to a seat of a user**
Sattel und Verfahren zur Anpassung von einem Sitz des Sattels zum Sitz eines Gebrauchers
Selle et procédé de conformer un siège d'une telle selle au siège d'un utilisateur

(30) Priority: 02.06.2006 NL 1031948
(43) Date of publication of application: 05.12.2007
(73) Proprietor: Koga B.V., 8445 PD Heerenveen (NL)
(72) Inventor: Loot, Daniël Emile, 8447 AP Heerenveen (NL); Wit, Olaf Floris, 8441 AD Heerenveen (NL)
(74) Representative: van Loon, C.J.J.

(56) References cited:
- DE-A1- 3 625 210
- DE-A1- 19 532 227
- US-A- 5 203 607
- US-A- 6 012 188
- US-A1- 2003 234 565

## Description

### FIELD AND BACKGROUND OF THE INVENTION

The invention relates to a saddle for use on a bicycle, comprising a thermoplastic layer located along a seat of the saddle for deforming the thermoplastic layer, in deformable condition, under load, from an initial condition in a deformed condition which is fixed, through transition from the deformable condition into a non-deformable condition, for supporting a seat of a rider. The invention also relates to a method for conforming a seat of such a saddle to a seat of a user.

Such a saddle is known from German patent publication 3625210 A1 (or DE 19863625210). German patent publication 3625210 A1 describes a saddle whose seat is formed by a cover filled with a foam or thermoplastic material. By having the rider seat himself on the saddle before the material in the cover has hardened, the seat of the saddle is conformed to the seat of the rider.

An advantage of such saddles is that the pressure on the seat of the user is distributed more evenly, so that, especially with prolonged use of the saddle, the seat of the user will be sore less rapidly.

However, a drawback of such saddles is that once they have been conformed to the seat of a first user, this makes them unsuitable to other users.

### SUMMARY OF THE INVENTION

It is an object of the invention as disclosed by the features of independent claims 1 and 12, to provide a solution which enables repeated adjustment of the shape of a saddle for the benefit of different users.

According to the present invention, this object is achieved in that the saddle of the initially indicated sort comprises a resilient layer for returning the thermoplastic layer to the unloaded, deformable condition, from the deformed condition to the initial condition.

When the thermoplastic layer is loaded in the deformable condition by the user seating himself on the saddle, the resilient layer is impressed to a greater or lesser extent, depending on the pressure applied thereon, and the thermoplastic layer conforms to the form of the seat of the user. By having the thermoplastic layer change, through cooling down, from the deformable condition to the non-deformable condition, this form is fixed. The thermoplastic layer retains the shape of the seat of the user, while the resilient layer remains partly pressed-in. A permanent impression, so to speak, is formed in the seat of the saddle. Due to this deformation of the seat of the saddle, the pressure on the seat of the user is distributed more evenly and less great peak loads occur. As a result, the user can remain in the saddle longer before he is bothered by a sore seat.

When the deformed thermoplastic layer, in unloaded condition, i.e. without the user seated on the saddle, is brought in the deformable condition, the pressed-in material of the resilient layer applies a force to the thermoplastic layer. Under the influence of this force, the thermoplastic layer is returned to the initial condition.

As the thermoplastic layer can be returned to the initial condition by the resilient layer, the process of forming the seat is reversible. As a result, a saddle according to the invention can be repeatedly adjusted for the benefit of different users.

In addition, the form of the saddle according to the invention can be adjusted when the position of the saddle or the position of the handlebars is changed for a different sitting position, or when the same saddle is placed on a different bicycle.

The invention also provides a bicycle according to claim 11, and a method for forming a seat of a saddle according to claim 12.

Particular variant embodiments of the invention have been laid down in the dependent claims.

These and other aspects and effects and details related to the invention are described in the following on the basis of an exemplary embodiment.

### BRIEF DESCRIPTION OF THE DRAWING

Fig. 1 schematically shows, in top plan view, an example of an embodiment of a bicycle saddle according to the invention;
Fig. 2 shows a schematic representation of a side view of the bicycle saddle of Fig. 1;
Fig. 3 shows a schematic, partial representation of a cross-section of the saddle of Fig. 1 along the line AA' in unloaded condition; and
Fig. 4 shows a schematic, partial representation of a cross-section of the saddle of Fig. 1, along the line AA', in deformed condition.

### DETAILED DESCRIPTION

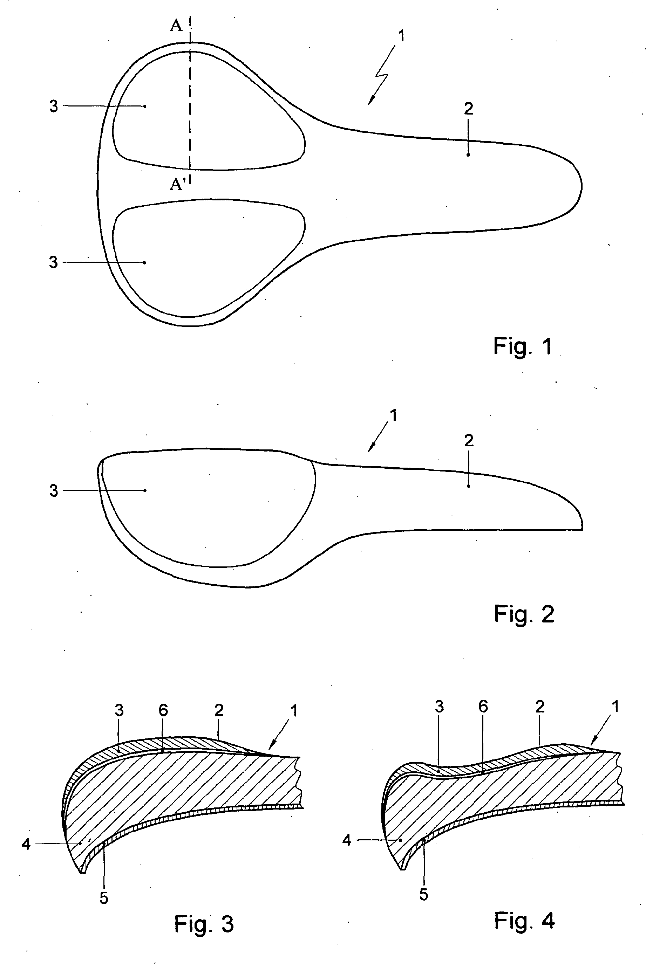

Figs. 1 and 2 show a schematic top plan view and a side view, respectively, of a saddle 1 according to the invention. The saddle 1 is provided with a seat 2, and a thermoplastic layer 3.

Fig. 3 shows a schematic, partial representation of a cross-section of the saddle 1 of Fig. 1 along the line AA', in unloaded condition. The core of the saddle 1 is formed by a resilient layer 4, which offers flexible support to the thermoplastic layer 3. The resilient layer 4 is supported by a carrier 5. Between the resilient layer 4 and the thermoplastic layer 3 is a heating element 6. The saddle 1 is further provided with a cover or covering layer, and means for fastening the carrier to a saddle pin, these have not been represented.

In the situation shown in Fig. 3, the thermoplastic layer 3 is in an initial condition, wherein the layer extends along a part of the seat 2 of the saddle 1. From this position, the thermoplastic layer 3 can be conformed to the seat of a user of the saddle 1.

The thermoplastic layer 3 of the saddle 1 according to the invention can be in two conditions. At a normal temperature of use, the thermoplastic layer 3 is in a non-deformable condition. The layer 3 is relatively rigid. When loaded, the layer 3 can give somewhat, but in this condition it retains it shape, for the most part.

Through heating of the thermoplastic layer 3, this can be brought in a deformable condition. In this condition, the layer 3 is relatively flexible, and can be bent into all sorts of positions. By having the thermoplastic layer 3 cool down in a particular position until is has regained its non-deformable condition, this position can be fixed. The thermoplastic layer 3 retains this form for as long as it is in the non-deformable condition.

In order to bring the thermoplastic layer 3 in the deformable condition, the thermoplastic material is heated to above the (glass)temperature, which means the temperature above which the thermoplastic layer looses its rigidity, without it disintegrating or melting. This latter happens only at the higher melting temperature. A material with a relatively high (glass)temperature has as an advantage that, unintentionally, the thermoplastic layer 3 rapidly achieves the deformable condition, for instance in that the bicycle saddle is left in the blazing sun for a while, or when the saddle is used intensively for a longer period of time. On the other side, a high (glass)temperature has as a drawback that it costs relatively much time and energy to heat the thermoplastic layer 3 to the desired temperature for conforming the seat 2 of the saddle 1 to the seat of the user. Furthermore, in that case, the temperature of the seat 2 of the saddle 1 becomes too high for a user to be comfortably seated thereon. The (glass)temperature of the thermoplastic layer 3 of the saddle 1 according to the invention is preferably above 40 °C, preferably above 45 °C, and is, for instance, 50°C. Optionally, a saddle 1 according to the invention can be provided with a heat-resistant layer, for instance a reflecting layer, for screening the thermoplastic layer from the ambient heat, for instance sunlight.

Preferably, the thermoplastic layer comprises a thermoplastic elastomer material, for instance a thermoplastic polyolefin elastomer with a (glass)temperature of 50 °C and a Shore A 57 hardness. With such hardness, the material is still somewhat flexible and resilient even in non-deformable condition. This enhances the sitting comfort. The thickness of the thermoplastic layer 3 can be, for instance, 5 to 6 mm.

The rubbery properties of thermoplastic elastomers stimulate the transition, in unloaded, deformable condition, into the initial condition, which promotes the reversal of the deforming process.

The thermoplastic layer 3 of the saddle 1 is supported by a resilient layer 4. This resilient layer 4 extends along the entire seat 2 of saddle 1, and provides the seat 2 with a resilient surface. The resilient layer 4 may be formed of a foam material, and can vary in thickness, depending on the load on the seat 2. The parts which, when loaded, must be able to absorb a relatively great load, can be thicker so that at those locations, the saddle 1 can be pressed-in further. Preferably, the resilient layer 4 has a thickness of 2 cm. As foam material, for instance, a polyurethane foam can be used with a density of 90 kg per cubic meter and a hardness of 25 kPa at 40% impression (standard CLD measurement). In an alternative embodiment, the resilient layer 4 can also comprise several sorts of foam material with different hardnesses, and/or extend along a limited part of the seat, for instance only for supporting the thermoplastic layer.

In a further alternative embodiment, the resilient layer 4 can comprise a rubber material, spiral springs, or, for instance, air chambers for the provision of a resilient seat 2, and for support of the thermoplastic layer 3.

The resilient layer 4, in turn, is supported by a carrier 5 which is provided with means for connecting the saddle 1 to a saddle bar, and with, optionally, for instance, spiral springs for providing a sprung saddle 1. In the exemplary embodiment shown in the Figures, the carrier 5 comprises a plastic dish part 5 that completely supports the resilient layer 4. However, it is also possible to use a carrier which supports the resilient layer 4 only in particular places, a wire-shaped carrier which is connected on different locations with the resilient layer 4, and/or which is partly integrated in the resilient layer 4.

As shown in Figs. 3 and 4, the saddle 1 is provided with a heating element 6 for heating the thermoplastic layer 3. The heating element 6 is located between the resilient layer 4 and the thermoplastic layer 3, and is flexible so that it can deform when the seat surface 2 is loaded. The heating element 6 may comprise wires that heat up as soon as an electric current runs through them. In an alternative embodiment, the heating element 6 can, for instance, also be integrated in the thermoplastic layer 3 or be provided on the seat side of the thermoplastic layer 3.

The heating element can be provided with a possibility for connection to an energy source such as, for instance, the electric mains, a battery or a dynamo, for use of electric energy for heating the thermoplastic layer. In an alternative embodiment, also, means can be provided for the use of hot air or liquid for heating the thermoplastic layer 3.

For conforming the saddle 1 to the seat 2 of a user, the thermoplastic layer 3 is heated in the initial condition until it is in the deformable condition. Then, the saddle 1 is loaded as the user seats himself on the saddle 1. Here, the seat of the user partly sinks into the resilient layer 4, while this is depressed, depending on the pressure applied thereto, to a greater or smaller extent. Here, the flexible thermoplastic layer 3 conforms along the seat 2 of the saddle 1 to the seat of the user, the so-called deformed condition. By, presently, having the thermoplastic layer 3 change, through cooling, from the deformable condition to the non-deformable condition, this shape is fixed. The thermoplastic layer 3 retains the shape of the seat of the user, and the resilient layer 4 remains partially pressed-in. A permanent impression is formed, so to speak, in the seat 2 of the saddle 1. As this deformation of the seat 2 of the saddle 1 is fixed, the pressure on the seat of the user is distributed more evenly and less great peak loads occur. As a result, the user can remain in the saddle 1 longer before he is bothered by a sore seat.

It is preferred that during cooling off of the seat 1, the user rides the bicycle. In this manner, the seat 1 is dynamically loaded during cooling off. During the movement of the legs and the shifting of the seat, the pressure on the saddle will not continually be the same. As the saddle cools off slowly, the eventual impression in the seat of the saddle will fit the seat and the riding motion of the user.

In order to deform an already formed saddle surface 2 to the seat of a new user of the saddle 1, it is preferred that the thermoplastic layer 3 first be returned to the initial condition. What is prevented as a result thereof is that the thermoplastic layer 3 conforms only partly to the seat of the new user and that parts of the previous deforming condition are maintained.

In order to return the thermoplastic layer 3 to the initial condition, the thermoplastic layer 3 in the unloaded condition, i.e. without the user seated on the saddle 1, is heated until it is in the deformable condition.

With the thermoplastic layer 3 in the deformed condition, the pressed-in material of the resilient layer 4 applies a force to the thermoplastic layer 3. Under the influence of this force, the thermoplastic layer 3 is returned to the initial condition. Here, preferably, the thermoplastic layer 3 is heated to a temperature which is higher than the temperature used for deforming the thermoplastic layer in the deformed condition, to stimulate the thermoplastic layer to return completely to the initial condition.

Preferably, the thermoplastic layer 3 comprises a thermoplastic elastomer material. The rubbery properties of these materials stimulate them taking their original shape again in unloaded, deformable condition.

The thermoplastic layer 3 further has a preferably substantially constant thickness. As a result, the layer 3 can easily be homogeneously heated so that the layer has a homogeneous flexibility in deformable condition. At the edges of the thermoplastic layer 3, especially when the thermoplastic layer 3 extends locally along an elevated part of the saddle 1, the thickness of the layer can taper to enable a gradual transition to the seat 2 of the saddle 1.

Once the thermoplastic layer 3 is in the initial condition, a new user can sit down on the saddle 1 for, once more, forming the seat of the saddle 1.

As the thermoplastic layer 3, as set forth hereinabove, is returned by the resilient layer 4 to the initial condition, the process of forming seat 2 of the saddle 1 from an initial condition to a deformed condition is reversible. This allows for the saddle 1 according to the invention to be repeatedly adjusted for the benefit of different users.

Furthermore, the form of the seat 2 of a saddle 1 according to the invention can be adjusted by a user when, for instance, the saddle is placed on another bicycle or when the bicycle is set differently.

In the exemplary embodiment shown in Figs. 1- 4, the thermoplastic layer 3 extends along the parts of the seat 2 of the saddle 1 that offer support to the ischia of a user seated on the saddle 1. From a viewpoint of anatomy, these areas around the ischia are most suitable for transmitting forces. This in contrast to the part round, for instance, the genital area of the user.

Preferably, the thermoplastic layer 3 extends along an elevated part of the seat 2 of the saddle 1. The weight of the user is transmitted to the saddle in particular at the location of the ischia, here, the load on the saddle 1 is the highest. Consequently, in this area, the saddle 1 is impressed most. As the thermoplastic layer 3 extends along an elevated part in this area, the user is prevented from sinking too much into the saddle 1 upon deformation of the saddle 1, and the pressure on the remaining parts of his seat is prevented from increasing to such an extent that peak load occurs there.

Adjusting the bicycle saddle can for instance be carried out in a bicycle shop. First, the saddle 1 is placed at a saddle height that is correct for the user. Then, the thermoplastic layer 3 of the saddle 1 is heated until this layer 3 is in the deformable condition, for instance by connecting the heating element to the electric mains. With the thermoplastic layer 3 sufficiently heated, the user seats himself on the saddle 1 so that, under the load of the user, the seat 2 of the saddle 1 is deformed from the initial condition to the deformed condition. By having the thermoplastic layer 3, through cooling off, change from the deformable condition to the non-deformable condition, the deformed condition is fixed for supporting the user. Preferably, during cooling off, the saddle 1 is dynamically loaded. Placing the bicycle on, for instance, a roller bench allows for the dynamic loading to be carried out in a simple and controllable manner in the bicycle shop.

As the saddle 1, in the deformed condition of the seat 2 of the saddle 1, is pressed-in to some extent, it may be necessary to adjust the saddle height after forming the saddle 1.

In the case of a saddle already conformed to the seat of a previous user, the thermoplastic layer 3 of the saddle 1 can first be returned to the initial position before it is conformed to the seat of a new user. Through sufficient heating of the thermoplastic layer 3 prior to it being loaded by a user, the thermoplastic layer 3 is returned, by the resilient layer 4, from the deformed condition to the initial condition.

It is also possible that the user himself adjusts the form of the saddle, for instance when he changes the setting of the handlebars and, hence, assumes a different sitting posture.

It is noted that the above-mentioned examples of embodiments are not limitative of the invention and that within the scope of the accompanying claims, various alternatives are possible.

For instance, the position and the shape of the area of the thermoplastic layer 3 on the seat 2 of the saddle can differ per type of saddle. The load of the seat of a user on, for instance, a mountain bike saddle differs from that on a touring saddle or racing bicycle saddle.

Also, the position of the thermoplastic layer 2 on the seat 2 can be varied to make saddles suitable for different ischia distances. With women for instance, this distance is greater than with men.

It is further possible, for instance, to heat the thermoplastic layer with hot air, to actively cool the thermoplastic layer during cooling, or to integrate the heating element in the thermoplastic layer 4.

Further, it is possible to use a saddle according to the invention on, for instance, an ergometer or other fitness apparatus such as a rowing machine.

Such and similar alternatives are understood to fall within the framework of the invention as defined in the accompanying claims.

## Claims

1. A saddle (1) for use on a bicycle, comprising a thermoplastic layer located along a seat (2) of the saddle for deforming the thermoplastic layer (3), in deformable condition, under load, from an initial condition in a deformed condition which is fixed, through transition from the deformable condition into a non-deformable condition, for supporting a seat of a rider, **characterized in that** the saddle comprises a resilient layer (4) for returning the thermoplastic layer, in unloaded, deformable condition, from the deformed condition to the initial condition.

2. A saddle according to claim 1, wherein the thermoplastic layer (3) comprises a thermoplastic elastomer material.

3. A saddle according to claim 1 or 2, wherein the thermoplastic layer (3) extends along only a part of the seat of the saddle.

4. A saddle according to claim 3, wherein said part is a part for supporting the ischia of a rider.

5. A saddle according to claim 3 or 4, wherein said part is an elevated part of the seat of the saddle.

6. A saddle according to any one of the preceding claims, wherein the thermoplastic layer has a substantially constant thickness.

7. A saddle according to any one of the preceding claims, wherein the temperature above which the thermoplastic layer loses his rigidity without it disintegrating or melting, is above 40 °C, preferably above 45 °C, arid is, for instance, 50 °C.

8. A saddle according to any one of the preceding claims, wherein the thermoplastic layer (3) is provided with a heating element (6).

9. A saddle according to any one of the preceding claims, wherein the resilient layer (4) comprises a foam material.

10. A saddle according to any one of the preceding claims, wherein the saddle comprises a heat-resistant layer along at least a portion of the seat.

11. A bicycle provided with a saddle according to any one of the preceding claims.

12. A method for conforming a seat of a saddle (1) for a bicycle to a seat of a user, wherein
a saddle is provided according to any one of claims 1 - 10,
the thermoplastic layer (3) of the saddle is heated to the deformable condition,
the seat of the saddle, under the load of the user, is deformed from the initial condition to the deformed condition,
the deformed condition of the saddle is fixed for supporting the seat of the user, in that the thermoplastic layer, through cooling off, changes from the deformable condition to the non-deformable condition.

13. A method according to claim 12, wherein during cooling off, the saddle is dynamically loaded by the user.

14. A method according to claim 12 or 13, wherein the thermoplastic layer of the saddle in the deformable condition, prior to being loaded by the user, is returned by the resilient layer from a previous deformed condition to the initial condition.

## Patentansprüche

1. Sattel (1) für die Verwendung auf einem Fahrrad, umfassend eine thermoplastische Schicht, angeordnet entlang einer Sitzfläche (2) des Sattels zum Verformen der thermoplastischen Schicht (3) in verformbarem Zustand bei Belastung von einem Anfangszustand in einen verformten Zustand, welcher fixiert ist, durch Übergang von dem verformbaren Zustand in einen nicht-verformbaren Zustand, zum Tragen einer Sitzfläche eines Fahrers, **dadurch gekennzeichnet, dass** der Sattel eine elastische Schicht (4) zur Rückführung der thermoplastischen Schicht in nichtbelastetem, verformbarem Zustand von dem verformten Zustand in den Anfangszustand aufweist.

2. Sattel gemäß Anspruch 1, wobei die thermoplastische Schicht (3) ein thermoplastisches Elastomermaterial aufweist.

3. Sattel gemäß Anspruch 1 oder 2, wobei die thermoplastische Schicht (3) sich nur entlang eines Teils der Sitzfläche des Sattels erstreckt.

4. Sattel gemäß Anspruch 3, wobei der Teil ein Teil zum Tragen des Ischias eines Fahrers ist.

5. Sattel gemäß Anspruch 3 oder 4, wobei der Teil ein erhöhter Teil der Sitzfläche des Sattels ist.

6. Sattel gemäß einem der vorherigen Ansprüche, wobei die thermoplastische Schicht eine im Wesentlichen konstante Dicke aufweist.

7. Sattel gemäß einem der vorherigen Ansprüche, wobei die Temperatur, oberhalb derer die thermoplastische Schicht ihre Steifigkeit verliert, ohne sich zu zersetzen oder zu schmelzen, über 40 °C, vorzugsweise über 45 °C und beispielsweise 50 °C beträgt.

8. Sattel gemäß einem der vorherigen Ansprüche, wobei die thermoplastische Schicht (3) mit einem Heizelement (6) ausgestattet ist.

9. Sattel gemäß einem der vorherigen Ansprüche, wobei die elastische Schicht (4) ein Schaummaterial umfasst.

10. Sattel gemäß einem der vorherigen Ansprüche, wobei der Sattel entlang mindestens eines Teils der Sitzfläche eine wärmebeständige Schicht aufweist.

11. Fahrrad, ausgestattet mit einem Sattel gemäß einem der vorherigen Ansprüche.

12. Verfahren zum Anpassen einer Sitzfläche eines Sattels (1) für ein Fahrrad an eine Sitzfläche eines Benutzers, wobei
ein Sattel gemäß einem der Ansprüche 1 bis 10 bereitgestellt wird,
die thermoplastische Schicht (3) des Sattels in den verformbaren Zustand erwärmt wird,
die Sitzfläche des Sattels unter der Belastung des Benutzers von dem Anfangszustand in den verformten Zustand verformt wird,
der verformte Zustand des Sattels zum Tragen der Sitzfläche des Benutzers dadurch fixiert wird, dass sich die thermoplastische Schicht durch Abkühlen von dem verformbaren Zustand in den nicht-verformbaren Zustand wandelt.

13. Verfahren gemäß Anspruch 12, wobei der Sattel während des Abkühlens durch den Benutzer dynamisch belastet wird.

14. Verfahren gemäß Anspruch 12 oder 13, wobei die thermoplastische Schicht des Sattels in dem verformbaren Zustand vor der Belastung durch den Benutzer durch die elastische Schicht von einem vorherigen verformten Zustand in den Anfangszustand zurückgeführt wird.

## Revendications

1. Une selle (1) pour utilisation sur une bicyclette, comprenant une couche thermoplastique située le long d'un siège (2) de la selle pour déformer la couche thermoplastique (3), dans un état déformable, sous une charge, à partir d'un état initial vers un état déformé qui est figé, par passage de l'état déformable à un état non déformable, pour supporter le siège d'un cycliste, **caractérisée en ce que** la selle comprend une couche élastique (4) pour faire revenir la couche thermoplastique, dans un état sans charge et déformable, à partir de l'état déformé à l'état initial.

2. La selle selon la revendication 1, dans laquelle la couche thermoplastique (3) comprend un matériau élastomère thermoplastique.

3. La selle selon la revendication 1 ou 2, dans laquelle la couche thermoplastique (3) s'étend seulement sur une partie du siège de la selle.

4. La selle selon la revendication 3, dans laquelle ladite partie est une partie destinée à supporter l'ischion d'un cycliste.

5. La selle selon la revendication 3 ou 4, dans laquelle ladite partie est une partie en surélévation du siège de la selle.

6. La selle selon l'une quelconque des revendications précédentes, dans laquelle la couche thermoplastique présente une épaisseur sensiblement constante.

7. La selle selon l'une quelconque des revendications précédentes, dans laquelle la température au-dessus de laquelle la couche thermoplastique perd sa rigidité sans pour autant se désintégrer ou fusionner est supérieure à 40°C, de préférence supérieure à 45°C et est, par exemple, de 50°C.

8. La selle selon l'une quelconque des revendications précédentes, dans laquelle la couche thermoplastique (3) est équipée d'un élément chauffant (6).

9. La selle selon l'une quelconque des revendications précédentes, dans laquelle la couche élastique (4) comprend un matériau alvéolaire.

10. La selle selon l'une quelconque des revendications précédentes, dans laquelle la selle comprend une couche thermorésistante le long d'au moins une partie de la selle.

11. Une bicyclette munie d'une selle selon l'une quelconque des revendications précédentes.

12. Un procédé pour conformer un siège d'une selle (1) pour une bicyclette en un siège d'un utilisateur, dans lequel
une selle selon l'une quelconque des revendications 1 à 10 est fournie,
la couche thermoplastique (3) de la selle est chauffée à l'état déformable, le siège de la selle, sous le poids de l'utilisateur, est déformé à partir de l'état initial jusqu'à l'état déformé,
l'état déformé de la selle est fixé pour supporter le siège de l'utilisateur, en ce que la couche thermoplastique, en se refroidissant, passe de l'état déformable à l'état non déformable.

13. Le procédé selon la revendication 12, dans lequel, lors du refroidissement, la selle est chargée dynamiquement par l'utilisateur.

14. Le procédé selon la revendication 12 ou 13, dans lequel, la couche élastique fait revenir à partir d'un état déformé précédent jusqu'à l'état initial la couche thermoplastique de la selle dans l'état déformable, avant d'être chargée par l'utilisateur.
